# DEMANDE DE BREVET EUROPEEN

(11) **EP 2 071 497 A1**
(43) Date de publication de la demande: **17.06.2009**
(21) Numéro de dépôt: 07291480.7
(22) Date de dépôt: 10.12.2007
(51) Int. Cl.: G06K 19/07, H04B 5/00, H02J 7/02, G06K 19/077

(54) **Procédé et dispositif chargeur de batterie sans contact**

(71) Demandeur: Gemalto SA, 92190 Meudon (FR)
(72) Inventeur: Capomaggio, Gregory, 92190 Meudon (FR)
(74) Mandataire: Cour, Pierre

(57) **Abrégé**

Pour recharger la batterie d'un objet portable communicant avec un lecteur établissant une communication sur un champ électromagnétique modulé, il est proposé un procédé de rechargement. L'objet portable envoie (209) au moins un message d'attente au lecteur. Ledit message d'attente indique au lecteur une durée d'attente WTXM avant un prochain message. L'objet portable utilise l'énergie du champ électromagnétique pour recharger sa batterie pendant la durée d'attente.

## Description

L'invention se rapporte à un procédé et un dispositif chargeur de batterie sans contact. Plus particulièrement, l'invention se rapporte à des dispositifs utilisant une communication par modulation d'un champ électromagnétique d'alimentation et disposant en outre d'une batterie pour fonctionner hors du champ électromagnétique d'alimentation.

Dans le monde des cartes à puce, ou autre petit dispositif portable à circuit intégré de même nature, il a très longtemps été utilisé une source d'alimentation externe. L'une des principales raison est que l'intégration d'une batterie dans un objet de petite dimension n'est pas une chose aisée. Ainsi, les protocoles de communication utilisés prévoient une alimentation de la carte soit par contact, par exemple le protocole ISO7816, soit sans contact, par exemple le protocole ISO 14443.

Dans le monde des lecteurs de cartes à puce sans-contact, il est courant de coupler un périphérique lecteur de carte à un ordinateur personnel (PC). Le standard PC/SC a été défini par le PC/SC Workgroup afin de standardiser les échanges entre PC et carte. Le standard PC/SC est le plus souvent utilisé pour échanger des données entre l'hôte et le dispositif sans-contact. Le standard PC/SC exploite le protocole de communication définit dans le standard IS014443-4, plus connu sous l'intitulé T=CL, orienté en échange de messages communément appelés trames ou « Blocks », dans lequel on distingue trois types de trames:
- Les I-Block : trames permettant l'échange d'information entre un lecteur et un dispositif sans contact.
- Les R-Block : trames permettant d'accuser réception des trames précédemment envoyées entre un lecteur et un dispositif sans contact.
- Les S-Block : trames permettant la synchronisation du protocole de communication entre un lecteur et un dispositif sans contact.

Le standard PC/SC a la particularité d'implémenter notamment un mode de détection, qui permet, lorsqu'aucune donnée « utile » n'est transmise entre le lecteur et le dispositif sans-contact (communication suspendue), de savoir si le dispositif sans-contact est toujours présent, ou a été retiré du lecteur, en échangeant régulièrement des trames « non-utiles » avec le dispositif. Le standard PC/SC propose deux types de trames, envoyées par le lecteur, permettant de détecter la présence du dispositif sans-contact :
- Le R-Block(NAK) : lors de la réception de cette trame le dispositif sans-contact retransmet la dernière trame d'information envoyée.
- Le I-Block vide : lors de la réception de cette trame le dispositif sans-contact répond avec une trame d'information elle aussi
- vide ou contenant un statut d'erreur.

Par ailleurs, il est connu de réaliser des piles et même des batteries de quelques centaines de micromètres d'épaisseur pour pouvoir les intégrer dans un corps de carte. Dans le cas des batteries rechargeables, l'utilisation est actuellement limitée à des cartes dont l'alimentation se fait par contact afin d'avoir un apport d'énergie suffisant.

Le rechargement d'une batterie par l'intermédiaire du champ électromagnétique de communication pose cependant quelques problèmes. Le champ électromagnétique sert d'une part à alimenter la carte et d'autre part à communiquer avec la carte. Ce double emploi du champ électromagnétique permet tout juste d'alimenter la puce de la carte à puce tout en modulant le champ pour communiquer. Une surconsommation, qui serait liée par exemple au rechargement d'une batterie interne à la carte à puce, engendrerait une perturbation du champ électromagnétique, pouvant ainsi induire des erreurs de communication entre la carte et le lecteur. De plus, les échanges entre le lecteur et la carte étant totalement imprévisibles, aucun intervalle de temps ne peut être réservé par la carte pour effectuer cette recharge. Par conséquent, il convient d'utiliser préférentiellement un mode de charge de batterie qui soit plus adapté.

Un aspect de l'invention concerne un procédé pour maximiser le chargement d'une batterie d'un dispositif portable disposant d'une alimentation par son champ électromagnétique de communication.

Selon un premier aspect, l'invention se rapporte à un procédé de rechargement d'une batterie d'un objet portable communicant avec un lecteur établissant une communication sur un champ électromagnétique modulé qui permet d'alimenter l'objet portable. L'objet portable dispose d'une batterie rechargeable. L'objet portable envoie au moins un message d'attente au lecteur, ledit message d'attente indiquant au lecteur une durée d'attente avant un prochain message. L'objet portable utilise l'énergie du champ électromagnétique pour recharger sa batterie pendant la durée d'attente.

Préférentiellement, l'objet portable peut envoyer au moins un message d'ajustement au lecteur pour ajuster la puissance du champ électromagnétique. Le message d'ajustement peut être un message de même nature que le message d'attente dont la durée d'attente est plus courte. Plusieurs messages d'ajustement peuvent être envoyés jusqu'à ce que le champ électromagnétique atteigne un niveau de puissance correspondant à un niveau de puissance souhaité pour recharger la batterie.

Selon un deuxième aspect, l'invention se rapporte à un objet portable communicant sur un champ électromagnétique modulé. L'objet portable comporte des moyens de récupération d'énergie à partir du champ électromagnétique, des moyens de communication pour démoduler et moduler des messages sur le champ électromagnétique, des moyens de traitement, et une batterie permettant un fonctionnement des moyens de traitement en dehors du champ électromagnétique. L'objet portable comporte un mode de rechargement de batterie pendant lequel les moyens de traitement envoient au moins un message d'attente au lecteur. Ledit message d'attente indique au lecteur une durée d'attente avant un prochain message. L'objet portable utilise l'énergie du champ électromagnétique pour recharger sa batterie pendant la durée d'attente.

L'invention sera mieux comprise, et d'autres particularités et avantages apparaîtront à la lecture de la description qui va suivre, la description faisant référence aux dessins annexés, parmi lesquels :
la figure 1 représente un exemple de carte selon l'invention,
la figure 2 représente de manière structurelle la carte de la figure 1,
la figure 3 représente un organigramme de fonctionnement de la carte en mode de communication,
la figure 4 représente un organigramme de fonctionnement de la carte pendant le mode de charge.

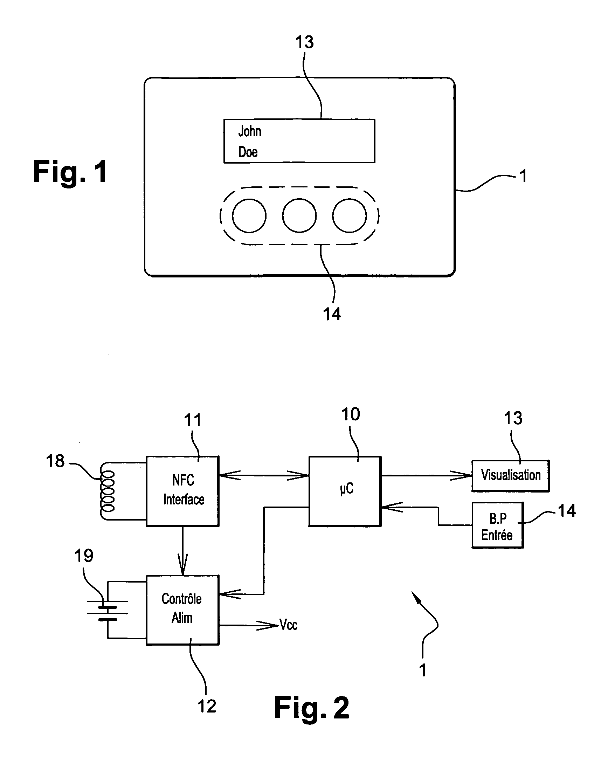

A titre d'exemple de mise en oeuvre de l'invention, on considère la carte 1 représentée sur les figures 1 et 2. La carte 1 est, par exemple une carte à puce de type sans contact servant pour du contrôle d'accès. Une telle carte à puce 1 permet, d'une part, d'identifier le possesseur de la carte grâce à des lecteurs sans contacts, et, d'autre part, de visualiser des informations telles que par exemple le nom du porteur de carte ou d'autres informations. Bien évidemment, toute autre carte à puce de type à interface sans contact et disposant de fonctionnalités nécessitant une batterie est concernée par l'invention.

La carte à puce 1 comporte un microcontrôleur 10, une interface de communication sans contact 11, un circuit d'alimentation 12, un dispositif de visualisation 13 et des boutons poussoirs 14. Le microcontrôleur 10 est le coeur de la carte à puce 1, il comporte tous les moyens de mémorisation et de traitement de la carte à puce. C'est le microcontrôleur 10 qui assure la gestion de tous les éléments de la carte à puce 1.

L'interface de communication 11 est une interface de type sans contact passive conforme au standard ISO14443 (Carte de Proximité Sans Contact) ou au standard NFC (de l'anglais Near Field Communication). Cette interface 11 permet au microcontrôleur 10 de communiquer avec un lecteur par l'intermédiaire d'un champ électromagnétique qui permet en outre d'alimenter la carte pendant la communication. A cet effet, l'interface 11 comporte une antenne 18 de type inductive qui sert également de demi-transformateur pour récupérer l'énergie du champ électromagnétique fourni par le lecteur. Selon un mode préféré de réalisation, cette interface 11 est conforme à la norme ISO 14443 et de nombreux modes de réalisation sont à la disposition de l'homme du métier.

Le circuit d'alimentation 12 reçoit d'une part l'énergie récupérée par l'interface 11 et dispose d'une batterie 19. Ce circuit d'alimentation 12 permet d'alimenter la totalité des éléments de la carte en fonction de commandes reçue du microcontrôleur 10. Selon l'invention, ce circuit d'alimentation permet d'acheminer tout ou partie de l'énergie reçue par l'interface 11 vers la batterie pour la recharger. Le circuit d'alimentation est contrôlé par le microcontrôleur 10.

Le dispositif de visualisation 13 est par exemple un écran à cristaux liquides de faible épaisseur et à basse consommation. Le dispositif de visualisation est contrôlé par le microcontrôleur 10 afin d'afficher différents messages à destination d'un utilisateur. Les boutons poussoirs 14 servent à un utilisateur à envoyer des commandes à destination du microcontrôleur 10. Ces boutons poussoirs 14 constituent des clefs d'entrée (en anglais INPUT KEYS) permettant, par exemple, de sélectionner l'information à visualiser sur le dispositif d'affichage, ou encore de lancer la génération d'un mot de passe à usage unique.

La carte à puce 1 dispose d'un premier mode de fonctionnement en liaison avec un lecteur de carte pendant lequel, le microcontrôleur 10 échange des données avec ledit lecteur. Durant ce premier mode de fonctionnement, la carte à puce est alimentée par le champ électromagnétique du lecteur. La batterie 19 peut être déconnectée par le circuit d'alimentation 12.

Dans un deuxième mode de fonctionnement, la carte 1 fonctionne de manière autonome. La batterie 19 est alors connectée par le circuit d'alimentation pour alimenter des différents composants de la carte. Ce deuxième mode de fonctionnement est utilisable tant que la batterie est suffisamment chargée pour fournir l'énergie nécessaire au fonctionnement des différents composants de la carte. Une batterie non rechargeable de carte à puce a une durée de vie qui dépend de l'usage qui est fait de la carte. Si cet usage est trop intensif, la durée de vie de la batterie et donc de la carte se voit fortement réduite. A cet effet, il est proposé d'utiliser une batterie 19 rechargeable à partir de l'énergie du champ électromagnétique.

Le rechargement de la batterie peut se faire soit de manière automatique, soit de manière manuelle. Le déclenchement manuel se faisant, par exemple, par l'appui sur un des boutons poussoirs 14. Ce rechargement peut être effectué soit en posant la carte sur un lecteur pendant une certaine durée, soit à chaque fois que la carte se situe en présence d'un lecteur.

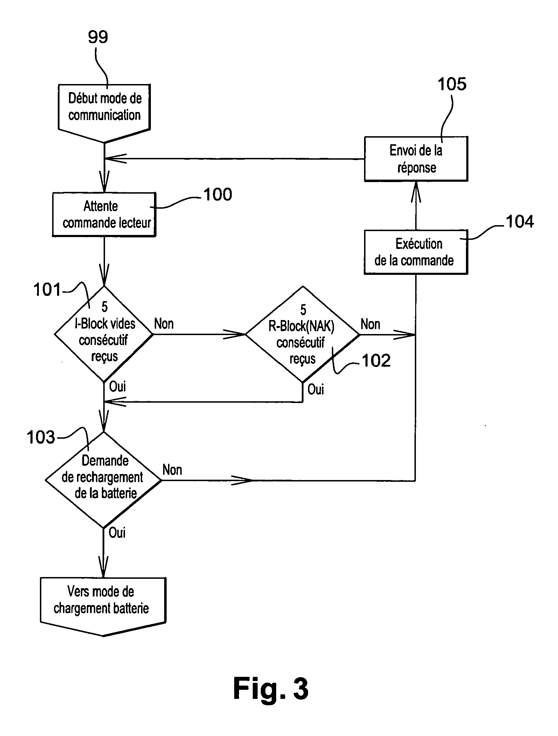

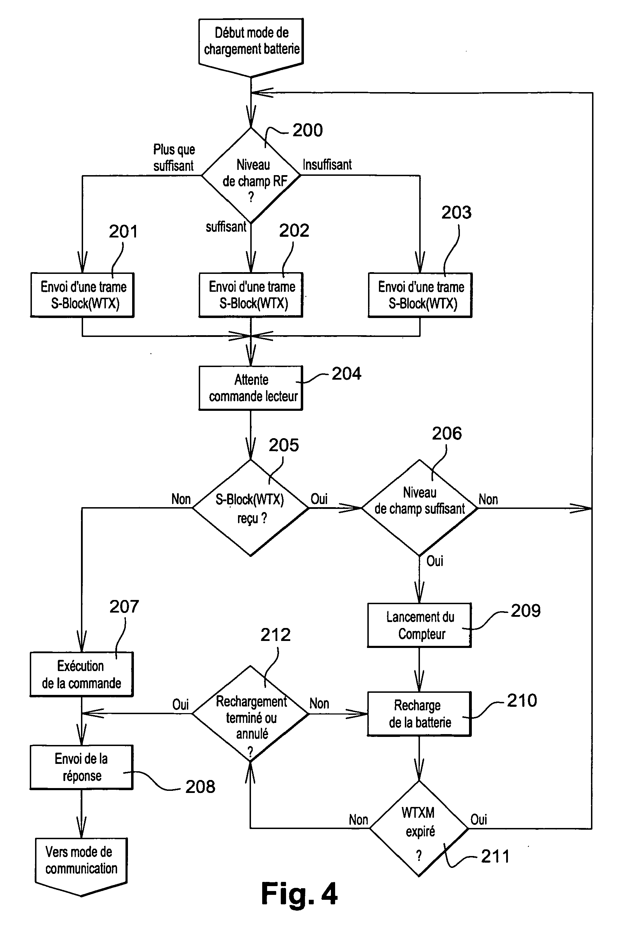

A titre d'exemple, la figure 3 montre un organigramme qui représente un lancement d'un mode de communication pour la carte 1. Le début 99 de cet organigramme commence lorsque la carte est mise en présence du champ électromagnétique. Une communication est réalisée en conformité avec la norme 14443 tant que la communication est souhaitée par le lecteur ou par la carte 1. Lorsque la communication entre la carte 1 et le lecteur est suspendue le lecteur transmet alors continuellement des trames « non utiles », de type R-Block(NAK) ou I-Block vide, telles que citées précédemment, afin de détecter la présence de la carte 1. Si la carte détecte un nombre prédéfini, par exemple 5, de trames « non utiles » consécutives, lors des tests 101 et 102, et qu'une charge est requise, lors du test 103, alors la carte 1 bascule dans un mode de rechargement décrit par l'organigramme de la figure 4.

A titre d'exemple, le test 103 est réalisé en vérifiant lors de la suspension d'une communication si un bit d'état du microcontrôleur 10 a été positionné pour requérir une charge de la batterie. Le bit d'état peut être activé manuellement en appuyant sur l'un des boutons poussoirs ou de manière automatique, par exemple lorsque le circuit d'alimentation 12 détecte un niveau de charge de la batterie 19 inférieur à un seuil prédéterminé.

La figure 4 montre comment se déroule le chargement rechargement de la batterie. Tout d'abord, une étape de vérification de niveau de puissance 200 compare le niveau du champ magnétique à un niveau de puissance requis pour déterminer si la puissance reçue par le champ électromagnétique est insuffisante, suffisante ou plus que suffisante. En fonction du niveau de puissance, une étape 201, 202 ou 203 d'envoi de message d'ajustement est réalisée. Cette étape 201, 202 ou 203 d'envoi de message d'ajustement correspond, dans le cadre le l'utilisation du standard ISO 14443, à l'envoi d'un message de type S-Block(WTX).

Parmi les messages de type S-Block, il existe un message de demande de temps supplémentaire qui est le message connu sous l'acronyme WTX, le message étant noté S-Block(WTX). Un tel message comporte un paramètre d'indication de niveau de puissance, noté PL (de l'anglais Power Level) dans le standard. Le paramètre d'indication de niveau de puissance PL peut prendre quatre valeurs distincte :

| Valeur binaire | Indication |
|---|---|
| 00 | Puissance insuffisante pour le fonctionnement complet. (Insufficient power for full functionality) |
| 01 | Indication de niveau de puissance non supporté par la carte. (PICC does not support the power level indication) |
| 10 | Puissance suffisante pour le fonctionnement complet. (Sufficient power for full functionality) |
| 11 | Puissance plus que suffisante pour le fonctionnement complet. (More than sufficient power for full functionality) |

Si, au cours de l'étape 200, la puissance est jugée insuffisante, alors l'étape 203 enverra un message de type S-Block(WTX) avec une valeur PL=00b. Si, au cours de l'étape 200, la puissance est jugée suffisante, alors l'étape 202 enverra un message de type S-Block(WTX) avec une valeur PL=10b. Si, au cours de l'étape 200, la puissance est jugée plus que suffisante, alors l'étape 201 enverra un message de type S-Block(WTX) avec une valeur PL=11b.

Ce paramètre est utilisé, en temps normal par la carte, pour indiquer si la puissance du champ électromagnétique est suffisante ou non pour effectuer une commande lecteur. La puissance nécessaire est généralement dépendante du type d'opération à effectuer. Par exemple, l'écriture dans un mémoire flash, dans la carte, demandera plus d'énergie qu'une lecture. Dans le cadre de l'invention, l'information de puissance est utilisée par la carte pour indiquer si la puissance du champ électromagnétique est suffisante ou non pour effectuer un rechargement de batterie.

Le message S-Block(WTX) comporte également un paramètre WTXM qui indique une durée d'attente. Pour les messages d'ajustement il convient de fixer ce paramètre afin qu'il corresponde à une valeur de durée minimale. A l'étape 204 la carte se met en attente d'une commande lecteur qui doit répondre par un message de type S-Block(WTX) identique pour accorder la demande de temps supplémentaire de la carte 1. L'étape 205 vérifie le type de message reçu. Si le message n'est pas de type S-Block(WTX) alors, le message reçu est exécuté à l'étape 207, une réponse est renvoyée au lecteur à l'étape 208, et le la carte retourne dans le mode de communication décrit par l'organigramme de la figure 3. Si le message S-Block(WTX) est bien reçu, alors il est vérifié que la puissance du champ est suffisante pour la charge de la batterie au cours d'une étape 206.

Si le niveau de puissance du champ n'est pas suffisant alors on retourne à l'étape 200 pour ajuster le niveau de puissance. Si le niveau de puissance est suffisant alors on initialise un compteur de temps à l'étape 209 qui correspond à une demande de temps supplémentaire WTXM qui correspond à la valeur de temps maximal d'un message d'attente de type S-Block(WTX) envoyé simultanément. Puis, on coupe l'alimentation d'une grande partie des composants de la carte afin que le maximum de puissance serve à recharger la batterie et on réalise une étape de rechargement 210.

L'étape de rechargement 210 étant lancée, une étape 211 est réalisée pour vérifier si le temps supplémentaire WTXM est expiré. Si c'est le cas, on retourne à l'étape 200 afin de relancer une nouvelle demande de temps supplémentaire au lecteur. Si le temps supplémentaire WTXM court toujours, une étape 212 est réalisée pour vérifier si la batterie a fini de se charger, ou si une annulation volontaire de la recharge a été envoyée au microcontrôleur 10. Si la batterie a fini de se charger, alors on termine l'organigramme en renvoyant la réponse à la commande lecteur (R-Block(NAK) ou I-Block vide en fonction du mode de détection utilisé). Si la batterie n'est pas complètement chargée, alors on boucle sur l'étape 210.

Le mode de réalisation qui vient d'être décrit correspond à un exemple de réalisation non limitatif. De nombreuses variantes de réalisation sont possibles. Notamment, il est fait référence au standard ISO 14443 alors que l'invention peut s'appliquer à tout autre standard qui utilise un champ électromagnétique modulé pour communiquer. Egalement, le standard PC/SC peut être remplacé par un autre standard de même nature qui régit les échanges de données entre un lecteur et une carte.

## Revendications

1. Procédé de rechargement d'une batterie (19) d'un objet portable (1) communicant avec un lecteur établissant une communication sur un champ électromagnétique modulé qui permet en outre d'alimenter l'objet portable, l'objet portable disposant en outre d'une batterie rechargeable, **caractérisé en ce que** l'objet portable envoie (209) au moins un message d'attente au lecteur, ledit message d'attente indiquant au lecteur une durée d'attente (WTXM) avant un prochain message, et dans lequel l'objet portable utilise l'énergie du champ électromagnétique pour recharger sa batterie pendant la durée d'attente.

2. Procédé selon la revendication 1, dans lequel l'objet portable envoie au moins un message d'ajustement (201-203) au lecteur pour ajuster la puissance du champ électromagnétique.

3. Procédé selon la revendication 2, dans lequel le message d'ajustement est un message de même nature que le message d'attente dont la durée d'attente est plus courte.

4. Procédé selon la revendication 2, dans lequel plusieurs messages d'ajustement sont envoyés jusqu'à ce que le champ électromagnétique atteigne un niveau de puissance correspondant à un niveau de puissance souhaité pour recharger la batterie.

5. Procédé selon la revendication 1, dans lequel l'objet portable communicant et le lecteur sont conforme à la norme ISO 14443 et dans lequel les messages d'attente sont des messages de type S-Block(WTX) ayant une durée d'attente importante.

6. Procédé selon les revendications 2 et 5, dans lequel le message d'ajustement est un message de type S-Block(WTX) dont la durée d'attente est plus courte que pour un message d'attente.

7. Objet portable (1) communicant sur un champ électromagnétique modulé qui comporte
- des moyens de récupération d'énergie (18) à partir du champ électromagnétique,
- des moyens de communication (11) pour démoduler et moduler des messages sur le champ électromagnétique,
- des moyens de traitement (10), et
- une batterie (19) permettant un fonctionnement des moyens de traitement en dehors du champ électromagnétique,
**caractérisé en ce que** l'objet portable comporte un mode de rechargement de batterie pendant lequel les moyens de traitement (19) envoient (209) au moins un message d'attente au lecteur, ledit message d'attente indiquant au lecteur une durée d'attente avant un prochain message, et l'objet portable utilise l'énergie du champ électromagnétique pour recharger sa batterie pendant la durée d'attente.
